# EUROPÄISCHE PATENTANMELDUNG

(11) **EP 2 899 527 A1**
(43) Veröffentlichungstag der Anmeldung: **29.07.2015**
(21) Anmeldenummer: 15152313.1
(22) Anmeldetag: 23.01.2015
(51) Int. Cl.: G01M 99/00

(54) **Verfahren zum Prüfen von Diesel-Partikelfiltern (DPF)**

(30) Priorität: 23.01.2014 DE 102014100766
(71) Anmelder: Oberland Mangold GmbH, 82438 Eschenlohe (DE)
(72) Erfinder: Fröhlich, Stefan, 86559 Adelzhausen (DE)
(74) Vertreter: Weickmann & Weickmann

(57) **Zusammenfassung**

Zum Prüfen von Diesel-Partikelfiltern, insbesondere gereinigten Diesel-Partikelfiltern, wird
- deren Strömungswiderstand,
- deren NO**2**-Bildungspotential und
- deren Partikel-Rückhaltefähigkeit durch entsprechende Maßnahmen in einer Prüfvorrichtung getestet, möglichst in einem Arbeitsgang.

## Beschreibung

### I. Anwendungsgebiet

Die Erfindung betrifft ein Verfahren zum Prüfen von insbesondere gereinigten Diesel-Partikelfiltern, insbesondere der geschlossenen Bauart.

### II. Technischer Hintergrund

Die Emissionen vor allem von Dieselmotoren gelten als gesundheitsschädlich und krebserregend wegen vor allem des darin enthaltenen sehr kleinteiligen Rußes. Dieser Ruß entsteht bei der Verbrennung von einem zu fetten Kraftstoffgemisch im Zylinder und gelangt mit dem gasförmigen Abgas in die Umwelt.

Durch entsprechende gesetzliche Normen wurden die Grenzwerte für sowohl gasförmige Schadstoffe als auch den in dem Abgas enthaltenen Ruß drastisch reduziert. Hierdurch wurde der Einsatz von Partikelfiltern, die im Abgas enthaltene Feststoffe wie Ruß herausfiltern, gefördert, insbesondere der Einsatz von geschlossenen Partikelfiltern.

Unter geschlossenen Partikelfiltern sind solche zu verstehen, bei denen die Strömungswege für das Abgas im Partikelfilter als Sackgassen enden, jedoch die Porosität im Wandmaterial ausreicht, um die gasförmigen Bestandteile des Abgases abzuführen, während die im Abgas enthaltenen Feststoffpartikel wie etwa Ruß, aber auch Asche, deren Größe im Bereich von Nano-Metern liegt, im Partikelfilter hängen bleiben. Solche DPFs bestehen oft aus keramischen Material wie etwa SiC und besitzen einen mittleren Porendurchmesser von **5** µm - **30** µm.

Ruß und Asche unterscheiden sich dadurch, dass Ruß großenteils aus reinem Kohlenstoff besteht und mittels Sauerstoff zu gasförmigen CO und CO**2** oxidiert werden kann und sich das Feststoffpartikel Ruß dadurch auflöst.

Asche dagegen ist in aller Regel bereits ein Oxid und kann nicht weiter oxidiert und auch nicht in die Gasphase überführt werden.

Somit kann durch Zufuhr von Sauerstoff und Wärme, wie etwa beim Ausbrennen eines Katalysators, lediglich der Ruß beseitigt werden, nicht jedoch die Asche.

Somit erhöht sich durch die sich immer mehr anlagernde Asche zum einen der Gegendruck des Filters und gleichzeitig wird die Rußspeicherfähigkeit des Filters verringert. Deshalb muss bei einer bestimmten Beladung des DPF mit Asche der Filter entweder aus dem Fahrzeug ausgebaut und durch einen anderen Filter ersetzt oder von der Asche gereinigt werden, was in der Regel im ausgebauten Zustand erfolgt.

Dabei ist die Reinigung oft der kostengünstigere Weg.

Man unterscheidet dabei zwei bekannte Reinigungsverfahren:
- Bei der nassen Reinigung wird der Filter mit einer Reinigungs-Flüssigkeit durchströmt. Wegen der hohen Dichte der Flüssigkeit sind nur niedrige Strömungsgeschwindigkeiten zulässig. Asche und Ruß werden dabei auf dem gleichen Weg, - in der Regel entgegen der Durchströmungsrichtung des Abgases - aus dem Filter gespült.

Der Nachteil dieses Verfahrens ist eine anschließend eventuell verringerte katalytische Aktivität des DPF, falls dieser katalytisch beschichtet war, da ein Teil dieser katalytischen Beschichtung beim Spülen entfernt wird. Ein weiterer Nachteil sind die eventuellen Veränderungen der Faser-Matten, welche den Filterkörper umschließen und im Blechmantel positionieren. Diese Matten reagieren empfindlich auf Wasser und könnten dadurch etwas von ihrer Vorspannung verlieren, sodass der Filterkörper anschließend unter Umständen nicht mehr zuverlässig und fest in seinem Gehäuse gehalten werden kann und beschädigt werden kann.
- Bei der trockenen Reinigung wird das Bauteil erhitzt, meist bei Luftatmosphäre auf **550** Grad, und dadurch der Ruß oxydiert zu gasförmigem CO und CO**2**. Um den keramischen Filterkörper nicht zum Bersten zu bringen, muss der Aufheizvorgang langsam erfolgen, sodass das Ausbrennen mehrere Stunden dauert.

Nachdem auf diese Art und Weise der Ruß beseitigt wurde, wird die immer noch vorhandene Asche mittels Druckluft aus dem DPF geblasen.

Um den Erfolg der Reinigungsmaßnahmen zu überprüfen, muss eine Prüfung des gereinigten Filters durchgeführt werden.

Nach dem Stand der Technik wird dies mittels einfacher Messung des Gegendruckes bei Beaufschlagung mit einem definierten Volumenstrom an Abgas ermittelt.

Da die Emmissionsvorschriften jedoch auch andere Werte vorschreiben, wie etwa einen Partikelmasse-Grenzwert, als auch einen Partikelanzahl-Grenzwert, als auch Grenzwerte für gasförmige Stoffe wie Kohlenstoffmonoxid und andere Kohlenstoffverbindungen, welche den Filter durchlaufen haben, ist die Gegendruckmessung nicht ausreichend, und ebenfalls nicht das auch angewandte Durchlichtverfahren.

### III. Darstellung der Erfindung

### a) Technische Aufgabe

Es ist daher die Aufgabe gemäß der Erfindung, ein Prüfverfahren für Dieselpartikelfilter, insbesondere gereinigte Dieselpartikelfilter, zur Verfügung zu stellen, welches einfach und kostengünstig durchzuführen ist. Ebenso soll eine entsprechende Prüfvorrichtung zur Verfügung gestellt werden.

Auch neue Dieselpartikelfilter sollen mit diesem Verfahren und dieser Vorrichtung geprüft werden können.

### b) Lösung der Aufgabe

Diese Aufgabe wird durch die Merkmale der Ansprüche 1 und 14 gelöst. Vorteilhafte Ausführungsformen ergeben sich aus den Unteransprüchen.

Hinsichtlich des Verfahrens wird die bestehende Aufgabe dadurch gelöst, dass zwei der wichtigsten gesetzlichen Grenzwerte direkt auf ihre Einhaltung überprüft werden, nämlich die Umsetzung gasförmiger Schadstoffe sowie an enthaltenen Partikeln für ein Gas, dass den DPF durchströmt hat.

Hierfür wird nicht direkt die Light-Off- Temperatur (diejenige Temperatur, bei der **50** % des Schadgases umgesetzt werden) von Kohlenmonoxid oder Kohlenwasserstoffen gemessen, da dieser Wert sich während der typischen Alterung des Katalysators nur langsam ändert, sondern der wesentlich aussagefähigere Wert der NO**2**-Bildung

Des Weiteren wird durch Schritt a) der Strömungswiderstand ermittelt, der zum einen für den korrekten Betrieb des vorgeschalteten Verbrennungsmotors wichtig ist und zum anderen erkennen lässt, ob - sofern ein zuvor gereinigter DPF geprüft wird - die Reinigung erfolgreich war, indem der vorher vorhandene Partikelbesatz des Filters, der den Strömungswiderstand mit der Zeit stark erhöht hatte, entfernt wurde.

Darüber hinaus lässt der gemessene Strömungswiderstand auch erkennen, ob eine grobe mechanische Beschädigung des DPF, z. B. ein Riss oder Bruch, vorliegt, denn dies würde den Strömungswiderstand stark absinken lassen, noch unter den Strömungswiderstand eines neuen intakten DPF.

Im Schritt a) wird der Strömungswiderstand vorzugsweise dadurch ermittelt, dass der DPF von einem Gas durchströmt wird und der Druck einmal vor und einmal nach dem DPF ermittelt wird und daraus der Differenzdruck bestimmt wird. Dies wird vorzugsweise über die gesamte Querschnittsfläche des DPF durchgeführt, denn würde diese Prüfung nur für Teilbereiche des Querschnittes durchgeführt, würde ein z. B. Riss in einem anderen Querschnittsbereich, der nicht geprüft wird, nicht ermittelt werden.

Dabei sollte eine Strömungsgeschwindigkeit des durchströmenden Gases von mindestens **5** m/sec, besser **15** m/sec, besser **25** m/sec, besser **40** m/sec vorliegen, da mit steigender Strömungsgeschwindigkeit der gemessene Differenzdruck immer stärker ansteigt, wenn der DPF teilweise zugesetzt ist.

Der ermittelte Differenzdruck wird dann mit einem Referenzwert verglichen, beispielsweise einem bei einem neuen baugleichen DPF ermittelten Referenzwert.

Falls der Strömungswiderstand nur über einen Teilbereich der Querschnittsfläche bestimmt wurde, muss auch der Differenzwert an dem baugleichen neuen DPF an der gleichen Querschnittsstelle bestimmt werden.

Als Gas, welches für die Ermittlung des Differenzdruckes benutzt wird, kann entweder das im späteren Betrieb des DPF verwendete Gas, beispielsweise ein Abgas eines insbesondere Diesel-Verbrennungsmotors, verwendet werden, oder auch ein anderes Gas.

Die Ermittlung des Strömungswiderstandes kann im ausgebauten Zustand in einer Prüfvorrichtung erfolgen, oder im eingebauten Zustand in beispielsweise einem Kraftfahrzeug, oder jedenfalls im Abgasstrang eines Dieselmotors, indem dort eine entsprechende Messmöglichkeit für den Druck im beaufschlagenden Abgas vor und hinter dem DPF vorgesehen wird.

Im Schritt b) wird das N02-Bildungspotential in der Regel dadurch ermittelt, dass der DPF von einem Gas durchströmt wird, welches eine oxidierbare Komponente, insbesondere NO, enthält, und der NO-Gehalt in dem Gas vor und nach dem DPF gemessen wird und die sich ergebende Differenz oder der Quotient daraus mit einem Referenzwert, wie ihn beispielsweise ein neuer baugleicher DPF liefert, verglichen wird.

Das hierfür benutzte Gas, sozusagen das Trägergas, kann das Abgas eines Verbrennungsmotors sein, beispielsweise indem der DPF vom Abgas desjenigen Verbrennungsmotors durchströmt wird, dessen Abgase er später im Betrieb auch tatsächlich reinigen soll. Dies kann im normalen Einbauzustand des DPF im Abgasstrang dieses Motors durchgeführt werden, oder indem das Abgas dieses Motors nur provisorisch im Rahmen einer Prüfvorrichtung durch den DPF geleitet wird, bevor dieser endgültig in den Abgasstrang des Motors eingebaut wird. Denn falls die Prüfung ergibt, dass der DPF den geforderten Anforderungen nicht genügt, weil beispielsweise die vorangegangene Reinigung nicht effektiv genug war, wäre ein zuvor bereits erfolgter Einbau in das Kraftfahrzeug umsonst durchgeführt worden und müsste wieder rückgängig gemacht werden.

Als Trägergas kann jedoch auch jedes andere Gas verwendet werden, welches nicht oder zu wenig originär NO enthält, und dem das NO, vorzugsweise in einer definierten Menge, zugesetzt wird, welches beispielsweise synthetisch erzeugt oder durch einen anderen Verbrennungsprozess hergestellt worden sein kann als in einer Verbrennungskraftmaschine.

Während des Messzyklus für das NO**2**-Bildungspotential sollte die NO-Zufuhr über mindestens eine halbe Minute, besser **1** Minute konstant sein, also mit gleicher Zuführung an NO-Masse pro Zeiteinheit.

Der Querschnittsbereich des DPF, an dem das NO**2**-Bildungspotential bestimmt wird, muss während des Messzyklus zwischen **200°**C und **400**°C aufweisen, wobei das NO**2**-Bildungspotential entweder bei definierter, konstant gehaltener Temperatur durchgeführt wird oder während eines Temperaturanstieges oder Abfalles permanent das NO**2**-Bildungspotential ermittelt wird, und diejenige Schwellentemperatur bestimmt wird, bei der ein vorgegebener Grenzwert der NO**2**-Bildung erreicht ist.

Die Temperatur des DPF im Reaktionsbereich für die NO**2**-Bildung kann auf unterschiedliche Art und Weise zur Verfügung gestellt werden:
Entweder ist das den DPF durchströmende Gas heiß genug und die Beaufschlagung mit Gas ausreichend lang, so dass hierdurch der entsprechende durchströmte Bereich des DPF vor der Bestimmung der NO**2**-Bildung auf eine bestimmte Mindesttemperatur aufgeheizt ist.

Die andere Möglichkeit besteht darin, den DPF auf andere Art und Weise fremd aufzuheizen, z. B. elektrisch, und ein NO-haltiges Trägergas auf den DPF aufzuleiten, welches deutlich kühler sein kann, beispielsweise lediglich Raumtemperatur besitzen kann. Die Wärmezufuhr durch die Heizung für den DPF muss dann ausreichend groß sein, um den Wärmeverlust durch das hindurchströmende kältere Gas auszugleichen.

Die Konzentration an NO im zugeführten Gas sollte bei **100** - **1000** ppm liegen.

Für die Partikelrückhaltefähigkeit wird der DPF - wiederum in seinem ganzen Querschnitt oder nur in einem oder mehreren Teilbereichen des Querschnitts - von einem Gas durchströmt, welches entweder eine bestimmte Partikelmenge pro Zeiteinheit oder eine bestimmte Partikelmasse pro Zeiteinheit enthält, wobei von den Partikeln vorzugsweise die Korngröße bekannt ist und vorzugsweise immer nur Partikel gleicher Korngröße verwendet werden, ggf. auch Partikel unterschiedlicher Korngröße zeitlich versetzt zueinander dem Gas aufgegeben werden.

Die zugesetzte Partikelmenge pro Zeiteinheit oder auch gibt zugesetzte absolute Partikelmenge sollte sinnvollerweise so hoch sein, dass danach das durchströmende Gas eine Partikelkonzentration von mehr als **5,0** x **10⁹ 1**/m**3**N, insbesondere von mehr als **2,0** x **10¹⁰ 1**/m**3**N besitzt.

Um die Partikelrückhaltefähigkeit des DPF zu bestimmen, stehen mehrere Methoden zur Verfügung:
- entweder kann stromabwärts des DPF die Anzahl der ankommenden Partikel detektiert werden, sei es durch z. B. optische, elektrische, nukleare Detektion oder durch Rückhaltung in einem nachgeschalteten Filter, der so fein ist, dass er alle restlichen Partikel abfängt
- die andere Möglichkeit besteht darin, den DPF vor und nach der Beaufschlagung mit dem partikelhaltigen Gas zu wiegen und seine Gewichtszunahme zu bestimmen und diese in Relation zu dem aufgegebenen Gesamtgewicht an Partikeln auf das Trägergas zu setzen.

Die Verfahrensschritte a), b), c) können vorzugsweise während der Durchströmung mit dem gleichen Trägergas durchgeführt werden, welchem in den Schritten b) und c) die entsprechenden Zuschlagstoffe aufgegeben werden, vorzugsweise in definierter Menge.

Die drei Verfahrensschritte a), b), c) können im ausgebauten Zustand des DPF aus dem Abgasstrang durchgeführt werden, oder es können einzelne oder auch alle der drei Verfahrensschritte im eingebauten Zustand im Abgasstrang des Dieselmotors durchgeführt werden, sofern dort die entsprechenden Messvorrichtungen vorhanden sind oder temporär angeordnet werden können.

Die erfindungsgemäße Vorrichtung zum Prüfen umfasst
- eine Zufuhr-Leitung und eine Abfuhr-Leitung mit Befestigungsvorrichtungen zum Befestigen eines DPF dazwischen, um diesen von der Zufuhr-Leitung zur Abfuhr-Leitung mit einem Gas zu durchströmen,
- eine Anschlussöffnung an der Zufuhr-Leitung, um daran eine Gas-Quelle für das entsprechende Gas anzuschließen, sei es eine Glasflasche oder eine Verbrennungseinheit,
- in der Zufuhr-Leitung und in der Abfuhrleitung jeweils einen Drucksensor, einen NO- oder NO**2**-Sensor und/oder einem O**2-**Sensor und/oder einem Temperatur-Sensor,
- einer Steuerung, die mit den einzelnen Sensoren verbunden ist und deren Signale auswertet, beispielsweise Vergleiche mit Referenzwerten durchführt, Verrechnungen der Signale von gleichartigen Sensoren gegeneinander durchführt wie Differenzbildung oder Quotienten-Bildung,
- eine Ausgabeeinheit für die Ergebnisse der Steuerung, die insbesondere eine Anzeigeeinheit wie etwa im Display und/oder einen Datenausgang umfasst und vorzugsweise auch eine Eingabe-Einheit, beispielsweise eine Tastatur.

In einer bevorzugten Ausführungsform umfasst die Vorrichtung auch eine Heizung, sei es an der Zufuhrleitung oder sei es in dem Arbeitsraum für den DPF.

### c) Ausführungsbeispiele

Ausführungsformen gemäß der Erfindung sind im Folgenden beispielhaft näher beschrieben. Es zeigen:

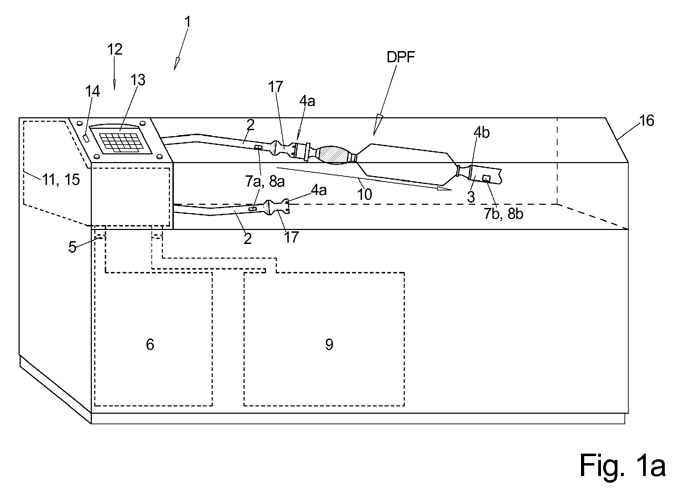

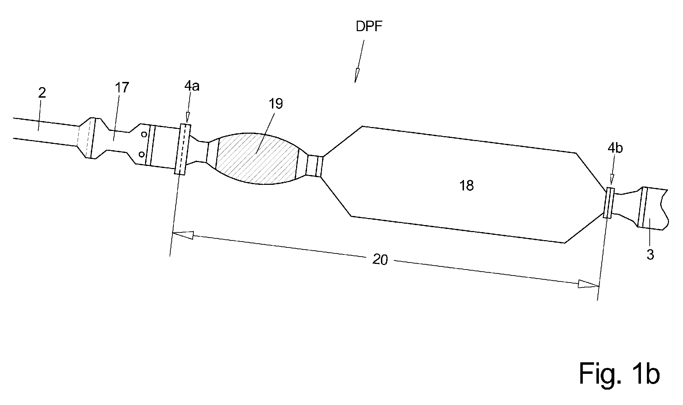

- Fig. **1**a:: eine perspektivische Ansicht der erfindungsgemäßen Vorrichtung,
- Figur **1**b:: eine vergrößerte Ansicht des Arbeitsraumes der Vorrichtung der Figur **1**a.

Figur **1**a zeigt eine Vorrichtung zum Prüfen eines Diesel-Partikelfilters (DPF).

In einen Arbeitsraum **16** der Vorrichtung - der offen oder abgedeckt sein kann - ragen in diesem Fall zwei Zufuhr-Leitungen **2** für Prüfgas hinein, sowie entgegengerichtet und beabstandet zu deren Befestigungsvorrichtungen **4**a eine Abfuhr-Leitung **3,** die ebenfalls am freien Ende eine Befestigungsvorrichtung **4**b aufweist.

An die Befestigungsvorrichtungen **4**a, b, also in diesem Fall zwischen die obere Zufuhrleitung **2** und die einzige Abfuhrleitung **3,** ist ein DPF montiert, der gerade geprüft wird.

Die beiden verschiedenen Zufuhrleitungen **2** können dazu dienen, unterschiedliche Prüfgase in den DPF einzuleiten, oder diese können auch unterschiedliche Befestigungs-Vorrichtungen **4**a aufweisen, die sich etwa in der Größe unterscheiden, um unterschiedlich dimensionierte DPFs anschließen zu können.

Im vorliegenden Fall werden durch die beiden Zufuhrleitungen **2** unterschiedliche Prüfgase geleitet, und am jeweiligen Ende der Zufuhrleitung **2** befindet sich ein auswechselbarer Adapter **17,** um eine Befestigungsvorrichtung **4**a der richtigen Größe für den zu prüfenden DPF zu bieten.

In jeder Zufuhrleitung **2** und jeder Abfuhrleitung **3** befindet sich nahe an den Befestigungs-Vorrichtungen **4**a, b jeweils ein Drucksensor **7**a, b und ein NO- oder NO**2**-Sensor **8**a, b, um sowohl den NO- oder NO**2**-Gehalt vor und hinter dem DPF messen zu können als auch den Druck in der Zufuhrleitung **2** und der Abfuhrleitung **3.**

In Figur **1**b ist in einer vergrößerten Detaildarstellung der zwischen die Zufuhrleitung **2** und die Abfuhrleitung **3** geschraubte DPF vergrößert dargestellt:
Der Wabenkörper **18** befindet sich dabei in einem starren Gehäuse mit kegelförmigen Ansatzstücken, von denen das eine direkt eine Befestigungsvorrichtung zum befestigen an der Befestigungsvorrichtung **4**b trägt.

Der DPF umfasst ferner ein Längenausgleichselement **19,** welches in diesem Fall in Durchfluss-Richtung **10** dem Wabenkörper **18** vorgelagert ist, und welches beispielsweise aus einem Metallgeflecht oder einem anderen Element bestehen kann, das im Inneren von der Gasströmung frei durchströmbar ist, sich jedoch in der Länge dehnen und zusammenziehen kann, um die thermisch bedingten Wärmeschwankungen des gesamten DPF auszugleichen, so dass der DPF immer die gleiche Gesamtlänge **20** besitzt.

### BEZUGSZEICHENLISTE

- **1**: Vorrichtung
- **2**: Zufuhr-Leitung
- **3**: Abfuhr-Leitung
- **4**a, b: Befestigungs-Vorrichtung
- **5**: Anschluss-Öffnung
- **6**: Gas-Quelle
- **7**a, b: Druck-Sensor
- **8**a, b: NO-Sensor
- **9**: Partikel-Zufuhrvorrichtung
- **10**: Durchfluss-Richtung
- **11**: Steuerung
- **12**: Ausgabe-Einheit
- **13**: Anzeige-Einheit
- **14**: Daten-Ausgang
- **15**: Heizung
- **16**: Arbeitsraum
- **17**: Adapter
- **18**: Wabenkörper
- **19**: Längenausgleichselement
- **20**: Gesamtlänge

## Patentansprüche

1. **Verfahren** zum Prüfen von, insbesondere gereinigten, Diesel-Partikel-Filtern (DPF), **gekennzeichnet durch**
a) Ermitteln des Strömungswiderstandes des DPF bei Durchströmung mit Gas,
b) Ermitteln des NO**2**-Bildungspotentials des DPF, und
c) Ermitteln der Partikel-Rückhaltefähigkeit des DPF.

2. Verfahren nach Anspruch **1,**
**dadurch gekennzeichnet, dass**
im Schritt a) der Strömungswiderstand ermittelt wird durch den Differenzdruck zwischen einer Position vor und einer Position nach dem DPF eines den DPF durchströmenden Gases, wobei die Strömungsgeschwindigkeit des Gasstrahles insbesondere höher als **5** m/s, besser höher als **15** m/s, besser höher als **25** m/s, besser höher als **40** m/s, liegt und der gemessene Differenzdruck mit einem Referenzwert verglichen wird.

3. Verfahren nach einem der vorhergehenden Ansprüche,
**dadurch gekennzeichnet, dass**
der Referenzwert der Differenzdruck eines baugleichen neuen DPF ist, und falls der Differenzdruck im Schritt a) nur über einen Teil des Querschnittes des DPF bestimmt wurde, der Referenzwert an dem neuen DPF an der analog gleichen Stelle des Querschnitts bestimmt wird.

4. Verfahren nach einem der vorhergehenden Ansprüche,
**dadurch gekennzeichnet, dass**
im Schritt a) die Ermittlung des Differenzdruckes bei unterschiedlich hohem Vordruck auf der Eingangsseite des DPF durchgeführt wird.

5. Verfahren nach einem der vorhergehenden Ansprüche,
**dadurch gekennzeichnet, dass**
im Schritt b) das NO**2**-Bildungspotential ermittelt wird, indem der DPF mit einem eine oxidierbare Komponente, insbesondere Stickstoffmonoxid, enthaltenden Gas oder Sauerstoff durchströmt und der NO-Gehalt in dem Gas vor und nach dem DPF gemessen und die Differenz oder der Quotient daraus gebildet und mit einem ReferenzWert verglichen wird.

6. Verfahren nach einem der vorhergehenden Ansprüche,
**dadurch gekennzeichnet, dass**
die NO-Zufuhr während des Messzyklus dieses Schrittes b) konstant gehalten wird, und insbesondere bei einer Konzentration von **100** bis **1000** ppm an NO.

7. Verfahren nach einem der vorhergehenden Ansprüche,
**dadurch gekennzeichnet, dass**
wenigstens beim Schritt b), insbesondere bei allen drei Schritten, die Temperatur des beaufschlagten Teils des DPF zwischen**200**°C und **400**°C gehalten wird, insbesondere indem der beaufschlagte Teil des DPF ausreichend lange mit einem entsprechend heißen Gas beaufschlagt wird, bevor das NO-Bildungspotential ermittelt wird, und/oder der DPF ganz oder teilweise durch eine andere Art der Heizung aufgeheizt wird, insbesondere elektrisch aufgeheizt wird.

8. Verfahren nach einem der vorhergehenden Ansprüche,
**dadurch gekennzeichnet, dass**
- die Messung des NO**2**-Bildungspotentials bei konstant gehaltener Temperatur erfolgt, oder
- dass die Messung des NO**2**-Bildungspotentials während einer ansteigenden oder absteigenden Temperatur des DPF gemessen wird, und bestimmt wird, bei welcher Schwellen-Temperatur ein vorgegebenes NO2-Bildungspotential erreicht wird.

9. Verfahren nach einem der vorhergehenden Ansprüche,
**dadurch gekennzeichnet, dass**
- als Trägergas für das zugeführte NO Abgase aus einem Verbrennungsprozess, insbesondere dem Verbrennungsprozess eines Verbrennungsmotors, benutzt werden die NO enthalten und die Abgase vor dem Aufbringen auf dem DPF höchstens bis auf **200**° C herabgekühlt werden, und/oder
- NO synthetisch erzeugt und im Schritt b) dem Trägergas zugesetzt wird.

10. Verfahren nach einem der vorhergehenden Ansprüche,
**dadurch gekennzeichnet, dass**
im Schritt c) die Partikel-Rückhaltefähigkeit bestimmt wird, indem einem den DPF durchströmenden Gas über insbesondere eine begrenzte Zeit eine bestimmte Partikelmenge pro Zeiteinheit oder eine bestimmte absolute Partikelmenge zugesetzt wird und stromabwärts des DPF
- entweder die Anzahl der ankommenden Partikel detektiert wird
- oder durch Wiegen festgestellt wird, wie viele Partikel entweder im DPF oder einem nachgeschalteten Feinfilter, der alle Partikel abfängt, hängen geblieben sind, und die Differenz mit einem Referenzwert verglichen wird.

11. Verfahren nach einem der vorhergehenden Ansprüche,
**dadurch gekennzeichnet, dass**
- die zugesetzte Partikelmenge pro Zeiteinheit oder eine bestimmte absolute Partikelmenge so hoch ist, dass das durchströmende Gas dann eine PartikelKonzentration von mehr als **5,0** x **10⁹ 1**/m**3**N, insbesondere von mehr als **2,0** x **10¹⁰ 1**/m**3**N besitzt, und/oder
- die zugesetzten Partikel eine definierte Partikelgröße und Partikelverteilung besitzen und insbesondere zeitlich zueinander versetzt Partikel mit einer anderen Größe zugesetzt werden und das Maß der durch den DPF zurückgehaltenen Partikel für jede Partikelgröße separat bestimmt wird.

12. Verfahren nach einem der vorhergehenden Ansprüche,
**dadurch gekennzeichnet, dass**
die Verfahrensschritte a), b) und c) während der Durchströmung mit dem gleichen Trägergas zeitversetzt zueinander durchgeführt werden, wobei dem Trägergas im Schritt b) NO und im Schritt c) Partikel zugesetzt werden, und insbesondere alle drei Schritte bei einer Temperatur durchgeführt werden, wie sie für Schritt b) erforderlich ist

13. Verfahren nach einem der vorhergehenden Ansprüche,
**dadurch gekennzeichnet, dass**
- die Bestimmung des Strömungswiderstandes gemäß Schritt a) über den gesamten Querschnitt des DPF durchgeführt wird, während das NO**2-**Bildungspotential gemäß Schritt b) und die Partikel-Rückhaltefähigkeit gemäß Schritt c) nur über einen oder mehrere Teilbereiche des Querschnittes des DPF ermittelt werden, und/oder
- die drei Schritte a), b) und c) in der gleichen Vorrichtung durchgeführt werden.

14. Vorrichtung (**1**) zum Prüfen eines Diesel-Partikelfilters (DPF), mit
- wenigstens einer Zufuhr-Leitung (**2**) und wenigstens einer Abfuhr-Leitung (**3**) mit Befestigungsvorrichtungen (**4**a, b) zum Befestigen eines DPF dazwischen,
- einer Anschluss-Öffnung (**5**) an der Zufuhr-Leitung (**2**) zum Verbinden mit einer Gas-Quelle (**6**),
- je einem Drucksensor (**7**a, b) in der Zufuhr-Leitung (**2**) und in der Abfuhr-Leitung (**3**),
- je einem NO- Sensor (**8**a, b) und/oder einem O**2**-Sensor in der Zufuhr-Leitung (**2**) und in der Abfuhr-Leitung (**3**),
- einer Partikel-Zufuhrvorrichtung (**9**), die insbesondere mit der Steuerung (**11**) in Verbindung steht, an oder in der Zufuhr-Leitung (**2**),
- einer Steuerung (**11)**, die mit den einzelnen Sensoren verbunden ist und in der Lage ist, deren Signale auszuwerten, insbesondere die Werte der gleichartigen Sensoren miteinander in beliebiger Weise zu verrechnen, und
- einer Ausgabeeinheit (**12**) für die Ergebnisse der Steuerung (**11**), die insbesondere eine Anzeigeeinheit (**13**) sowie einen Datenausgang (**14**) umfasst.

15. Vorrichtung nach Anspruch **14,**
**dadurch gekennzeichnet, dass**
die Vorrichtung eine Heizung (**15**), die mit der Steuerung (**11)** in Verbindung steht und/oder je einen Temperatursensor (**16**a, b) in der Zufuhr-Leitung (**2**) und in der Abfuhr-Leitung (**3**) aufweist.
